# EUROPÄISCHE PATENTSCHRIFT

(11) **EP 1 039 089 B1**
(45) Veröffentlichungstag und Bekanntmachung des Hinweises auf die Patenterteilung: **26.04.2006**
(21) Anmeldenummer: 00104120.1
(22) Anmeldetag: 29.02.2000
(51) Int. Cl.: E06B 3/984, F16B 25/00, E06B 3/96, F16B 12/46, F16B 35/04

(54) **Eck- oder Kämpferverbindung für zumindest teilweise aus Holzprofilen gebildete Fenster oder Türen, Fenster- oder Türrahmen oder dergleichen**
Assembly for a corner or for the mullion for door or window frames made at least partly of wooden section members
Assemblage pour les angles ou pour le meneau d'une porte ou fenêtre au moins partiellement constituée par des profilés en bois

(30) Priorität: 25.03.1999 DE 29905532 U
(43) Veröffentlichungstag der Anmeldung: 27.09.2000
(73) Patentinhaber: SFS intec Holding AG, 9435 Heerbrugg (CH)
(72) Erfinder: Steffen, Markus, 9472 Grabs (CH); Sieber, Alex, 9434 Au (CH)

(56) Entgegenhaltungen:
- EP-A- 0 267 153
- DE-U- 7 911 217
- DE-U- 9 307 816
- US-A- 2 292 557

## Beschreibung

Die Erfindung betrifft eine Eck- oder Kämpferverbindung für zumindest teilweise aus Holzprofilen gebildete Fenster oder Türen, Fenster- oder Türrahmen oder dergleichen, wobei an den gegenseitigen Verbindungsbereichen der Holzprofile in Bohrungen Schrauben eingesetzt sand, welche beide Holzprofile durch Gewindeabschnitte gegen axiales Verschieben sichem.

In vielen Ausführungsvarianten wurde schon versucht, mechanisch wirkende Holzverbindungen herzustellen, welche insbesondere bei Fenster oder Fensterrahmen zu verschiedenen Lösungen führten. Bei der Verbindung von Holzprofilen ergeben sich vielfach Probleme, weil der natürliche Werkstoff Holz quer zur Faserrichtung relativ starken Dimensionsänderungen unterworfen ist. Zudem ist eine optimale Befestigung in Holz parallel zur Faserrichtung nach wie vor problematisch. Mit den bisherigen Methoden zur Verbindung von Holzprofilen ergeben sich fast immer schwundbedingte Spaltbildungen, was nicht nur zu ästhetischen Problemen, sondern auch zu Einbußen bei der Festigkeit einer solchen Verbindung führt. Eine Spaltwirkung führt insbesondere bei bewitterten Holzteilen zu einer Kapillarfuge, über die Wasser eindringen kann. Dadurch findet eine Anfeuchtung des Holzes statt. Selbst wenn eine Verschraubung unter Aufbringung eines großen Anzugsmomentes angewendet wird, kann eine schwundbedingte Spaltbildung nicht verhindert werden. Außerdem darf gerade bei Schrauben für den Holzbereich, insbesondere bei Einsatz parallel zur Faserrichtung, kein allzu großes Drehmoment aufgebracht werden, ansonsten die Schraube überdreht.

Es sind Ausführungen bekannt (EP0267153A1 oder US3256661A), bei welchen Befestiger zur Abstandsbefestlgung eingesetzt sind. Der kleinere Durchmesser und Insbesondere die dazu notwendige Position des Befestigers lässt es nicht zu, dass eine genaue axiale Positionierung und die Aufnahme von Querkräften erfolgen kann.

Die vorliegende Erfindung hat sich daher zur Aufgabe gestellt, eine Eck- oder Kämpferverbindung der eingangs genannten Art zu schaffen, mit welcher sowohl Querkräfte als auch in Längsrichtung des Befestigungselementes wirkende Kräfte optimal übertragen werden können.

Erfindungsgemäß gelingt dies dadurch, dass ein antriebsseitiger Bereich des Schaftabschnittes mit dem Gewindeabschnitt und einem anschllessenden gewindefreien Schaftabschnitt der Schraube) einen grösseren Durchmesser aufweist, als der dem anderen, dem Antrieb abgewandten Ende zugeordnete Schaftabschnitt, und dass der Schaftabschnitt bei bestimmungsgemässem Einsatz in dem ersten Holzprofll liegt und über zumindest einen kurzen Bereich in das zweite Holzprofil hineinragt.

Eine derartige Eck- oder Kämpferverbindung kann bei Fenstern oder Türen, Fenster- oder Türrahmen oder dergleichen eingesetzt werden. Selbst bei starken Belastungen auf die miteinander zu verbindenden Holzprofile, bei welchen es sich auch um Bretter handeln kann, können die erforderlichen Querkräfte problemlos aufgenommen werden. Außerdem ist eine gegenseitige feste Verbindung der Holzprofile gewährleistet. Eine derartige Ausführung ist insbesondere auch deshalb vorteilhaft, well in dem Profil in der Regel für den Eingriff parallel zur Faserrichtung ein längerer Abschnitt zur Verfügung steht als in dem quer zur Faserrichtung zu durchdringenden Holzprofil. Somit ist gerade auch in diesem Bereich die Übertragung von größeren Querkräften möglich.

Durch die Kombination der erfindungsgemässen Merkmale wird erreicht, dass die miteinander zu befestigenden Holzprofile mit einer Schraube verbunden werden können und axial in der Lage positioniert und gehalten werden können. Ausserdem können Querkräfte und such in Längsrichtung der Schraube wirkende Kräfte optimal übertragen werden, wodurch auch die Montage massiv vereinfacht wird.

Eine besonders vorteilhafte Eck- oder Kämpferverbindung ist dann gegeben, wenn in einem stumpfen oder spitzen Winkel oder rechtwinklig zueinander ausgerichtete Holzprofile vorgesehen sind, wobei das antriebsseitige Ende der Schraube in dem ersten Holzprofil quer zur Faserrichtung eingesetzt und durch einen entsprechenden Gewindeabschnitt festgelegt ist und der andere Endbereich der Schraube zumindest annähernd in Faserrichtung in das zweite Holzprofil eingreift. Damit ist eine optimale Befestigung möglich, ohne dass es zusätzlicher Gegenhalterungen wie Muttern oder dergleichen bedarf. Die erforderlichen Festigkeitswerte können allein durch den Einsatz einer Schraube, welche Gewindeabschnitte für beide Holzprofile vorsieht, erzielt werden.

Zu einer optimalen Montage einer solchen Eck- oder Kämpferverbindung trägt bei, wenn die Holzprofile zum Einsetzen der Schraube vorgebohrt sind. Dadurch ist ein optimaler Sitz der Schraube in den beiden Holzprofilen gewährleistet, und zudem wird verhindert, dass sich die Holzprofile spalten.

Eine weitere Ausführungsvariante sieht vor, dass, dass die Gewindeabschnitte der Schraube die gleiche Gewindesteigung aufweisen. Bei einer solchen Ausbildung einer Schraube bedarf es jedoch eines vorhergehenden exakten Zusammendrückens der Eck- oder Kämpferverbindung, da ein gegenseitiges Anziehen der beiden Holzprofile beim Eindrehen der Schraube nicht mehr möglich ist.

Eine solche Möglichkeit wird dann geschaffen, wenn die beiden Gewindeabschnitte der Schraube eine unterschiedliche Gewindesteigung aufweisen. Dabei ist es vorteilhaft, wenn der dem antriebsseitigen Ende der Schraube zugewandte Gewindeabschnitt eine kleinere Gewindesteigung aufweist als der dem anderen, freien Ende zugewandte Gewindeabschrlitt. Dadurch ist gewährleistet, dass die beiden miteinander zu verbindenden Holzprofile beim Eindrehen der Schraube aneinander angepresst werden, wobei die beiden Holzprofille insbesondere bei den letzten Umdrehungen der Schraube fest gegeneinander gepresst werden.

Weiter wird vorgeschlagen, dass die Steigung des Gewindes des in das zweite Holzprofil eingreifenden Gewindeabschnittes der Schraube annähernd dem Kerndurchmesser des Schaftes in diesem Gewindeabschnitt entspricht. Bezogen auf den Durchmesser der Schraube ist demnach verhältnismäßig wenig Gewinde vorhanden. Da die zwischen jeweils einem Gewinde verbleibenden Holzabschnitte relativ groß sind, kann jedoch ein optimales Last-Form-Verhalten erzielt werden.

Ferner wird vorgesehen, dass am ersten Holzprofil eine gegenüber der Bohrung zur Aufnahme der Schraube vergrößerte Bohrung zur versenkten Aufnahme des werkzeugangriffsseitigen Endes der Schraube, z.B. eines Kopfes der Schraube, ausgebildet ist. Damit besteht die Möglichkeit, eine beliebige Ausgestaltung des warkreugungriffsseitigen Endes der Schraube vorzusehen, so dass unter Umständen sogar ein Außenwerkzeugangriff denkbar ist.

Gerade bei einer solchen Ausgestaltung ist es möglich, dass das freie Ende der vergrößerten Bohrung mittels eines Pfropfens verschließbar ist. Dadurch ist nicht nur die ganze Befestigung im Eck- oder Kämpferbereich gegen Witterungseinflüsse gesichert, sondern auch ein nachträgliches Lösen oder Nachziehen kann in einfacher Weise erfolgen.

Weitere erfindungsgemäße Merkmale und besondere Vorteile werden in der nachstehenden Beschreibung anhand der Zeichnung noch näher erläutert. Es zeigen:
Fig. 1 eine erfindungsgemäße Schraube;
Fig. 2 einen Schnitt durch die Verbindung zwischen zwei Holzprofilen, wobei zwei erfindungsgemäße Schrauben eingesetzt sind;
Fig. 3 eine Ansicht des Verbindungsbereiches zwischen zwei Holzprofilen in Pfeilrichtung III in Fig. 2.

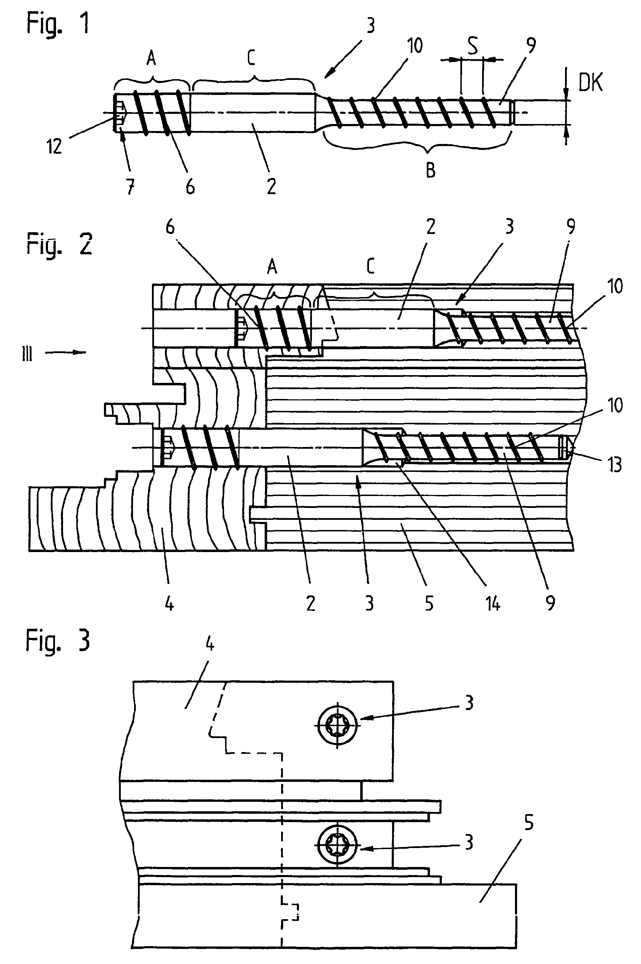

Die in Fig. 1 dargestellte Schraube 3 dient zur gegenseitigen Verbindung von stumpf oder in einem Gehrungsschnitt aneinander anliegenden oder aneinander anstoßenden Holzprofilen 4 und 5. In der Regel handelt es sich dabei um eine Eck- oder Kämpferverbindung für aus Holzprofilen gebildete Holzkonstruktionen wie Fenster oder Türen, Fenster- oder Türrahmen usw. Durch die beschriebene Eck- oder Kämpferverbindung wird mittels einer Schraube 3 eine Befestigungsmöglichkeit geschaffen, welche praktisch überall dort optimal eingesetzt werden kann, wo zumindest teilweise aus Holz bestehende Profile für Fenster, Türen, Fenster- oder Türrahmen usw. zusammengefügt werden sollen. Ob es sich dabei schlußendlich um Holzprofile, Holzplatten, Holzbalken oder Holzbretter handelt, ist nicht von Bedeutung. Natürlich wird eine solche Befestigungsmöglichkeit je nach Anwendungsbereich dimensionsmäßig angepaßt. Die Schraube 3 greift in den gegenseitigen Verbindungsbereich der Holzprofile 4, 5 ein, wobei die Schraube 3 in beiden Holzprofilen 4, 5 durch Gewindeabschnitte A bzw. B gegen axiales Verschieben gesichert ist. Es ist dadurch eine optimale gegenseitige Befestigung der beiden Holzprofile 4, 5 möglich.

Die Schraube 3 wird also im Übergangsbereich zwischen den zwei Holzprofilen 4, 5 eingesetzt und ist durch die beiden Gewindeabschnitte A und B an den beiden Holzprofilen 4 und 5 festlegbar. Zu diesem Zweck ist bei der gezeigten Ausführungsform auf einem Teilabschnitt A der Länge des Schaftabschnittes 2 ein Gewinde 6 aufgebracht. Dabei ist ein in Achsrichtung gesehen relativ kurzer Gewindeabschnitt A vorgesehen, wobei der daran anschließende Bereich C des Schaftabschnittes 2 eine glatte, zylindrische Oberfläche aufweist. Der Schaftabschnitt 2 und insbesondere der gewindefreie Bereich C desselben übergreift den Verbindungsbereich zwischen den beiden Holzprofilen 4 und 5, d.h. er ist in beiden Holzprofilen 4, 5 im Einsatz.

Die Schraube 3 weist einen Kopf 7 oder ein anderes angriffsseitiges Ende auf, wobei der Kopf 7 auch etwa den gleichen Durchmesser wie der Schaftabschnitt 2 aufweisen kann. Unmittelbar in Wirkverbindung mit dem zweiten Holzprofil 5 kommt die Schraube 3 lediglich mit dem auf dem Schaftabschnitt 9 der Schraube 3 vorgesehenen Gewindeabschnitt B und somit mit dem Gewinde 10.

Der Außendurchmesser des Schaftabschnittes 2 ist beim gezeigten Beispiel annähernd gleich groß wie der Durchmesser des Kopfes 7 oder eines entsprechenden Bundes der Schraube 3. Denkbar ist es auch, im Holzprofil 4 eine gegenüber der Bohrung 13 für den Schaftabschnitt 2 vergrößerte Bohrung zur versenkten Aufnahme des werkzeugangriffsseitigen Endes der Schraube 3, also z.B. eines größeren Kopfes 7, vorzusehen. In diesem Zusammenhang besteht dann die Möglichkeit, die vergrößerte Bohrung mittels eines Pfropfens zu verschließen. Bei einem Einsatz eines Pfropfens muß lediglich die Schraube 3 entsprechend tiefer in das Holzprofil 4 eingeführt werden, um den für den Pfropfen nötigen Platz zur Verfügung zu haben.

Das Gewinde 6 im Gewindeabschnitt A und das Gewinde 10 im Gewindeabschnitt B sind vorteilhaft schmal und schneidenartig ausgeführt. Die Steigung S des Gewindes 10 der Schraube entspricht annähernd dem Kerndurchmesser DK des Schaftabschnittes 9 im Gewindebereich. Damit wird gerade im Stirnbereich des Holzprofiles 5, wo die Fasern parallel zur Achsrichtung des Befestigungselementes verlaufen, ein optimaler Gewindeeinsatz gewährleistet, so daß auch große Auszugskräfte zu erreichen sind.

Beim Einsatz der erfindungsgemäßen Eck- oder Kämpferverbindung ist es notwendig, sowohl die Bohrung 13 zum Einsetzen des Schaftabschnittes 2 als auch die Bohrung 14 zum Einsatz des mit dem Gewindeabschnitt B versehenen Schaftabschnittes 9 vorab herzustellen. Damit ist ein optimaler Eingriff beider Gewindeabschnitte gewährleistet, und eine Spaltgefahr ist ausgeschlossen.

Der Einsatz der Schraube 3 erfolgt sinnvollerweise immer derart, daß der Gewindeabschnitt A stets relativ nahe dem Bereich der Fuge zwischen den Holzprofilen 4, 5 liegt, um dadurch die Lasteinleitung über das Gewinde möglichst nahe an der Fuge zu gewährleisten. Es ist also eine Lasteinleitung nahe der neutralen Fasern gegeben, weil sich dieser Bereich bei Quell- und Schwindvorgängen neutral verhält.

Durch die vorliegende Erfindung wird eine Befestigungsmöglichkeit geschaffen, mit welcher bei der Verbindung von Holzprofilen in optimaler Weise eine mechanische Befestigung in Form einer Schraube eingesetzt werden kann. Außerdem ist die Gewähr gegeben, daß die damit verbundenen Holzprofile später zu Recyclingzwecken problemlos wieder demontiert werden können. Zudem ist ein Nachziehen grundsätzlich möglich und insbesondere bei unterschiedlichen Gewindesteigungen der beiden Gewindeabschnitte A und B sinnvoll.

In der vorstehenden Beschreibung wird von einer Schraube 3 ausgegangen, welche zwei Schaftabschnitte 2 und 9 mit unterschiedlichem Außendurchmesser aufweist. Selbstverständlich ist es aber auch möglich, eine Schraube einzusetzen, bei welcher die beiden Schaftabschnitte durchgehend den gleichen Durchmesser, zumindest durchgehend den gleichen Außendurchmesser aufweisen. In diesem Zusammenhang ist ebenfalls die Möglichkeit gegeben, auf dem Schaft der Schraube ein durchgehendes Gewinde vorzusehen. Zudem ist es denkbar, daß die Gewindeabschnitte der Schraube oder auch ein durchgehendes Gewinde der Schraube immer die gleiche Gewindesteigung aufweisen. Bei einer solchen Konstruktion besteht dann allerdings keine Möglichkeit einer gegenseitigen Anpressung beim Anziehen der Schraube.

Wenn für die beiden Gewindeabschnitte A und B der Schraube 3 verschiedene Gewindesteigungen vorgesehen sind, dann ist es zweckmäßig, den dem antriebsseitigen Ende der Schraube 3 zugewandten Gewindeabschnitt A mit der kleineren Gewindesteigung auszustatten, um das Zusammenziehen beim Verschraubvorgang zu bewirken.

## Patentansprüche

1. Eck- oder Kämpferverbindung für zumindest teilweise aus Holzprofilen gebildete Fenster oder Türen, Fenster- oder Türrahmen oder dergleichen, wobei an den gegenseitigen Verbindungsbereichen der Holzprofile (4,5) in Bohrungen (13,14) Schrauben eingesetzt sind, welche beide Holzprofile (4, 5) durch Gewindeabschnitte (A, B) gegen axiales Verschieben sichem, **dadurch gekennzeichnet, dass** ein antriebsseitiger Bereich des Schaftabschnittes (2) mit dem Gewindeabschnitt (A) und einem anschliessenden gewindefreien Schaftabschnitt (C) der Schraube (3) einen grösseren Durchmesser aufweist, als der dem anderen, dem Antrieb abgewandten Ende zugeordnete Schaftabschnitt (9), und dass der Schaftabschnitt (2) bei bestimmungsgemässem Einsatz in dem ersten Holzprofil (4) liegt und über zumindest einen kurzen Bereich in das zweite Holzprofil (5) hineinragt.

2. Eck- oder Kämpferverbindung nach Anspruch 1, **dadurch gekennzeichnet, daß** in einem stumpfen oder spitzen Winkel oder rechtwinklig zueinander ausgerichtete Holzprofile (4, 5) vorgesehen sind, wobei das antriebsseitige Ende der Schraube (3) in dem ersten Holzprofil (4) quer zur Faserrichtung eingesetzt und durch einen entsprechenden Gewindeabschnitt (A) festgelegt ist und der andere Endbereich der Schraube (3) zumindest annähernd in Faserrichtung in das zweite Holzprofil (5) eingreift.

3. Eck- oder Kämpferverbindung nach den Ansprüchen 1 und 2, **dadurch gekennzeichnet, daß** die Holzprofile (4, 5) zum Einsetzen der Schraube (3) vorgebohrt sind.

4. Eck- oder Kämpferverbindung nach einem der Ansprüche 1 bis 3, **dadurch gekennzeichnet, daß** die Gewindeabschnitte (A, B) der Schraube (3) die gleiche Gewindesteigung (S) aufweisen.

5. Eck- oder Kämpferverbindung nach einem der Ansprüche 1 bis 3, **dadurch gekennzeichnet, daß** die beiden Gewindeabschnitte (A, B) der Schraube (3) eine unterschiedliche Gewindesteigung (S) aufweisen.

6. Eck- oder Kämpferverbindung nach Anspruch 5, **dadurch gekennzeichnet, daß** der dem antriebsseitigen Ende der Schraube (3) zugewandte Gewindeabschnitt (A) eine kleinere Gewindesteigung aufweist als der dem anderen, freien Ende zugewandte Gewindeabschnitt (B).

7. Eck- oder Kämpferverbindung nach einem der Ansprüche 1-6, **dadurch gekennzeichnet, daß** die Steigung (S) des Gewindes (10) des in das zweite Holzprofil (5) eingreifenden Gewindeabschnittes (B) der Schraube (3) annähernd dem Kerndurchmesser (DK) des Schaftes (9) in diesem Gewindeabschnitt (B) entspricht.

8. Eck- oder Kämpferverbindung nach Anspruch 1 und einem der vorhergehenden Ansprüche, **dadurch gekennzeichnet, daß** am ersten Holzprofil (4) eine gegenüber der Bohrung (14) zur Aufnahme der Schraube (3) vergrößerte Bohrung zur versenkten Aufnahme des werkzeugangriffsseitigen Endes der Schraube, z.B. eines Kopfes der Schraube, ausgebildet ist.

9. Eck- oder Kämpferverbindung nach Anspruch 8, **dadurch gekennzeichnet, daß** das freie Ende der vergrößerten Bohrung mittels eines Pfropfens verschließbar ist.

## Claims

1. A corner or transom joint for windows or doors, window or door frames or the like formed at least partly from timber sections, wherein screws are inserted into bores (13,14) in mutual connection zones of the timber sections (4,5), which screws secure both timber sections (4,5) against axial displacement by means of threaded portions (A,B), **characterised in that** a region of the shank portion (2) on the driving side, which has the threaded portion (A) and an adjacent threadless zone shank portion (C) of the screw (3), is of larger diameter than the shank portion (9) associated with the other end remote from the drive, and **in that**, when used as intended, the shank portion (2) is disposed in the first timber section (4) and at least over a short region projects into the second timber section (5).

2. A corner or transom joint according to Claim 1, **characterised in that** timber sections (4,5) are provided aligned at an obtuse or acute angle or at right angles to one another, wherein the end of the screw (3) on the drive side is inserted in the first timber section (4) across the grain and is located by a corresponding threaded portion (A), and the other end region of the screw (3) engages into the second timber section (5) at least approximately lengthwise of the grain.

3. A corner or transom joint according to Claim 1 or 2, **characterised in that** the timber sections (4,5) are predrilled for the insertion of the screw (3).

4. A corner or transom joint according to any one of Claims 1 to 3, **characterised in that** the threaded portions (A,B) of the screw (3) have the same thread pitch (S).

5. A corner or transom joint according to any one of Claims 1 to 3, **characterised in that** the two threaded portions (A,B) of the screw (3) have a different thread pitch (S).

6. A corner or transom joint according to Claim 5, **characterised in that** the threaded portion (A) nearest the end of the screw (3) on the drive side has a smaller thread pitch than the threaded portion (B) nearest the other, free end.

7. A corner or transom joint according to any one of Claims 1 to 6, **characterised in that** the pitch (S) of the screw-thread (10) of the threaded portion (B) of the screw (3) engaging in the second timber section (5) corresponds approximately to the root diameter (DK) of the shank (9) in this threaded portion (B).

8. A corner or transom joint according to Claim 1 and any one of the preceding Claims, **characterised in that** a bore is formed in the first timber section (4), which bore is enlarged with respect to the bore (14) for receiving the screw (3) and which is countersunk so as to receive the end of the screw on the tool-engagement side, for example the head of the screw.

9. A screw according to Claim 8, **characterised in that** the free end of the enlarged bore can be sealed by means of a plug.

## Revendications

1. Liaison d'angle ou de meneau pour des fenêtres ou portes, des châssis de fenêtres ou de portes ou analogues, constitués au moins en partiel par des profilés de bois, avec des vis insérées dans des alésages (13, 14) au niveau des zones de liaison opposées des profilés de bois (4, 5), et dont des sections filetées (A, B) fixent les deux profilés de bois (4, 5) pour empêcher tout déplacement axial,
**caractérisée en ce qu'**
une zone côté entraînement de la section de tige (2) avec la section filetée et une section de tige (C) sans filetage adjacente de la vis (3) présente un diamètre supérieur à la section de tige (9) associée à l'autre extrémité opposée à l'entraînement, et la section de tige (2), dans le cas d'une insertion adéquate, se trouve dans le premier profilé de bois (4) et dépasse sur au moins une courte zone dans le deuxième profilé de bois (5).

2. Liaison d'angle ou de meneau selon la revendication 1,
**caractérisée en ce que**
pour des profilés de bois (4, 5) orientés à angle aigu ou obtus ou à angle droit l'un par rapport à l'autre, l'extrémité côté entraînement de la vis (3) est insérée dans le premier profilé de bois (4) transversalement à la direction de la fibre et fixée par une section filetée correspondante (A), tandis que l'autre zone d'extrémité de la vis (3) s'engage au moins approximativement dans la direction de la fibre dans le deuxième profilé de bois (5).

3. Liaison d'angle ou de meneau selon les revendications 1 et 2,
**caractérisée en ce que**
les profilés de bois (4, 5) sont prépercés pour l'insertion de la vis (3).

4. Liaison d'angle ou de meneau selon l'une des revendications 1 à 3,
**caractérisée en ce que**
les sections filetées (A, B) de la vis (3) présentent le même pas (S).

5. Liaison d'angle ou de meneau selon l'une des revendications 1 à 3,
**caractérisée en ce que**
les deux sections filetées (A, B) de la vis (3) présentent un pas différent (S).

6. Liaison d'angle ou de meneau selon la revendication 5,
**caractérisée en ce que**
la section filetée (A) tournée vers l'extrémité côté entraînement de la vis (3) présente un pas inférieur à celui de l'autre section filetée (B) tournée vers l'extrémité libre.

7. Liaison d'angle ou de meneau selon l'une des revendications 1 à 6,
**caractérisée en ce que**
le pas (S) du filetage (10) de la section filetée (B) de la vis (3) s'engageant dans le deuxième profilé de bois (5) correspond approximativement au diamètre à fond de filet (DK) de la tige (9) dans cette section filetée (B).

8. Liaison d'angle ou de meneau selon la revendication 1 et l'une des revendications précédentes,
**caractérisée en ce que**
le premier profilé de bois (4) comporte un alésage agrandi par rapport à l'alésage (14) destiné à recevoir la vis (3), pour recevoir intégralement l'extrémité côté prise d'outil de la vis, par exemple la tête de la vis.

9. Liaison d'angle ou de meneau selon la revendication 8,
**caractérisée en ce que**
l'extrémité libre de l'alésage agrandi peut être fermée au moyen d'un bouchon.
